# EUROPEAN PATENT APPLICATION

(11) **EP 2 595 081 A1**
(43) Date of publication of application: **22.05.2013**
(21) Application number: 11806954.1
(22) Date of filing: 25.01.2011
(51) Int. Cl.: G06F 21/24, G06F 21/20, G06F 5/00

(54) **MALICIOUS CODE REAL-TIME INSPECTING DEVICE IN A DRM ENVIRONMENT AND RECORDING MEDIUM FOR RECORDING A PROGRAM TO EXECUTE A METHOD THEREOF**

(30) Priority: 16.07.2010 KR 20100069040
(71) Applicant: Fasoo. Com Co., Ltd, Seoul 121-270 (KR)
(72) Inventor: PARK, Chel, Seoul 152-773 (KR); LEE, Jong-Il, Goyang Si Gyeonggi-do 411-370 (KR); YI, Yeong-Hun, Seoul 130-070 (KR); CHIN, Kyo-Young, Seoul 157-746 (KR)
(74) Representative: Grünecker, Kinkeldey, Stockmair & Schwanhäusser
(86) International application number: PCT/KR2011/000513
(87) International publication number: WO 2012/008669

(57) **Abstract**

Disclosed are a malicious code real-time inspecting device in a DRM environment and a recording medium for recording a program to execute a method thereof. A DRM module performs decryption and encryption during file reading/writing operations through a handle after confirming user rights relating to a file on the basis of a handle of a file having DRM applied when an execute command is inputted, outputs an inspection request message including a handle and a path of a file, and determines whether to perform an open operation of a file according to a malicious code inspection result on a file. A malicious code inspecting module inspects whether an original file, which is to be decrypted and read by the DRM module, is infected by malicious code or not on the basis of a handle and a path of a file in an inspection request message delivered from an interface module. According to the present invention, whether a document encrypted with DRM applied is infected by malicious code is inspected and treated in real-time.

## Description

### Technical Field

The present invention relates, in general, to a real-time malicious code inspection apparatus and a recording medium for storing a program for executing a real-time malicious code inspection method on a computer and, more particularly, to a real-time malicious code inspection apparatus that is capable of inspecting in real time whether a file to which Digital Rights Management (DRM) is applied has been infected with malicious code, and to a recording medium for storing a program for executing a real-time malicious code inspection method on a computer.

### Background Art

The popularization of the Internet has had both positive aspects, such as information sharing that overcomes temporal and spatial restrictions, and negative aspects, such as hacking and malicious code spreading. Among such negative aspects, problems related to attacks on other systems and the destruction of information of other terminals using malicious code, such as viruses, spyware, and worms, are so serious at the present time that they are felt to be frequent problems. Such malicious code is mainly spread through files, programs, etc., which are downloaded over the Internet. A method of determining whether infection with malicious code has been made and removing malicious code using an anti-virus program has been widely used as a method of coping with such malicious code.

The removal of malicious code using an anti-virus program is the simplest and easiest method for normal files. However, there is a problem in that files to which Digital Rights Management (DRM) is applied can be inspected and cleaned using an anti-virus program only after encrypted files have been decrypted. Due to such a problem, a virus inspection and cleaning technique differing from those of normal files is required for files to which DRM is applied.

First, technology for inspecting a file to which DRM is applied for malicious code and removing the malicious code from the file by means of user testing provided by an anti-virus program will be described. Since user testing is performed in a user mode, it is implemented using a Software Development Kit (SDK) that can access an encrypted file provided by DRM. In this case, a DRM module is operated in conjunction with the anti-virus program. When the user runs the anti-virus program and selects a file to which DRM is applied and which is desired to be inspected and cleaned, the anti-virus program requests the decryption of the corresponding file by calling the DRM module. If it is verified that the DRM module has the right to 'store' the corresponding file, it decrypts the corresponding file and stores the decrypted file in memory as a source file to be cleaned. The anti-virus program inspects the source file stored in the memory for viruses and removes the viruses, and then calls the DRM module again. The DRM module encrypts the source file that has been cleaned and then stores the encrypted source file.

Next, real-time inspection is implemented by a driver, is operated in a kernel mode, and is realized in such a way as to hook the access of an application program to the file (the opening and closing of the file by the application program). However, since DRM requires tasks of authenticating a user, accessing a key, and transmitting usage details in order to decrypt a document, it cannot be executed in the kernel mode. Therefore, it is impossible to apply real-time inspection which is performed in the kernel mode to files to which DRM is applied and which are operated in the user mode.

### Disclosure

### Technical Problem

An object of the present is to provide an apparatus that is capable of inspecting in real time whether an encrypted file to which Digital Rights Management (DRM) is applied has been infected with malicious code, and is capable of removing the malicious code.

Another object of the present invention is to provide a computer-readable recording medium that stores a program for executing a method that is capable of inspecting in real time whether an encrypted file to which DRM is applied has been infected with malicious code, and is capable of removing the malicious code, on a computer.

### Technical Solution

In order to accomplish the object, an embodiment of a real-time malicious code inspection apparatus in a Digital Rights Management (DRM) environment according to the present invention includes a DRM module configured to, when a user inputs an execution command for a file to which DRM is applied, verify a right of the user to access the file based on a handle generated in accordance with the file, perform decryption/encryption upon performing a file read/write operation using the handle generated in accordance with the file, output an inspection request message including both the handle generated in accordance with the file and a path of the file, and determine whether to perform an operation of opening the file, based on results of inspection of the file for malicious code; an interface module configured to transfer the inspection request message input from the DRM module; and a malicious code inspection module configured to inspect whether a source file decrypted and read by the DRM module has been infected with malicious code, based on the handle generated in accordance with the file and the path of the file, which are included in the inspection request message received from the interface module, and transfer results of inspection of the source file for malicious code to the DRM module via the interface module.

In order to accomplish the other object, an embodiment of a computer-readable recording medium for storing a program for executing a real-time malicious code inspection method in a Digital Rights Management (DRM) environment on a computer includes (a) when a user inputs an execution command for a file to which DRM is applied, verifying a right of the user to the file based on a handle generated in accordance with the file, performing decryption/encryption upon performing a file read/write operation using the handle generated in accordance with the file, and outputting an inspection request message including both the handle generated in accordance with the file and a path of the file; (b) inspecting whether a decrypted and read source file has been infected with malicious code, based on the handle generated in accordance with the file and the path of the file, which are included in the inspection request message input from a DRM module, and returning results of inspection of the source file for malicious code; and (c) determining whether to perform an operation of opening the file, based on the results of the inspection of the file for malicious code.

### Advantageous Effects

In accordance with a real-time malicious code inspection apparatus in a DRM environment and a recording medium for storing a program for executing a real-time malicious code inspection method on a computer according to the present invention, an interface capable of operating in conjunction with an anti-virus program is provided upon implementing DRM, and the anti-virus program is loaded onto a DRM-supporting application program, thus inspecting in real time whether an encrypted document, to which DRM is applied, has been infected with malicious code, and removing the malicious code.

### Description of Drawings

Fig. 1 is a diagram showing the configuration of a preferred embodiment of a real-time malicious code inspection apparatus in a DRM environment according to the present invention; and
Fig. 2 is a flowchart showing a process for performing a preferred embodiment of a real-time malicious code inspection method in a DRM environment according to the present invention.

### Best Mode

Hereinafter, preferred embodiments of a real-time malicious code inspection apparatus in a DRM environment and a recording medium for storing a program for executing a real-time malicious code inspection method on a computer according to the present invention will be described in detail with reference to the attached drawings.

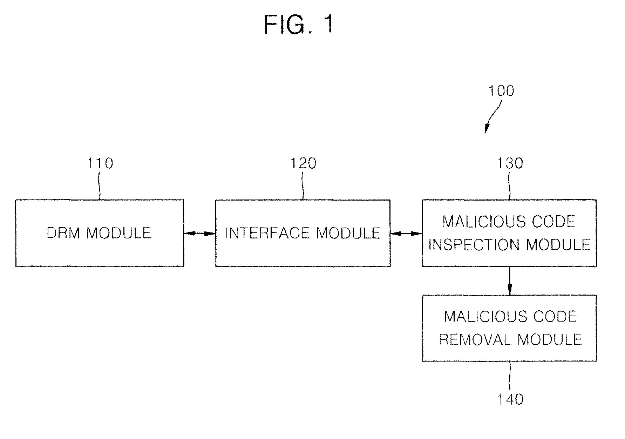

Fig. 1 is a diagram showing the configuration of a preferred embodiment of a real-time malicious code inspection apparatus in a Digital Rights Management (DRM) environment according to the present invention.

Referring to Fig. 1, a preferred embodiment 100 of a real-time malicious code inspection apparatus in a DRM environment according to the present invention includes a DRM module 110, an interface module 120, a malicious code inspection module 130, and a malicious code removal module 140.

The DRM module 110 is configured to, when a user inputs an "open file" command by conducting an operation, such as by double-clicking a file to which DRM is applied, verify the right of the user to access the corresponding file based on a handle generated in accordance with the file. In this case, the handle generated in accordance with the corresponding file is effective only in a process including the DRM module 110. If it is verified that the user has the 'right to read' the file, the DRM module 110 performs decryption/encryption upon performing a file read/write operation based on the handle generated in accordance with the file. Next, the DRM module 110 calls the interface module 120 by providing the handle generated in accordance with the file and a path of the file. Further, the DRM module 110 outputs a message based on the results of the inspection of malicious code received from the interface module 120 to the user. The results of the inspection, output by the DRM module 110 to the user, differ depending on whether malicious code has been detected. If the results of the inspection, indicating that malicious code has not been detected, are transferred from the interface module 12, the DRM module 110 performs the operation of opening the corresponding file without outputting a separate message to the user. In contrast, if the results of the inspection, indicating that malicious code has been detected, are transferred, the DRM module 110 outputs a message indicative of infection with malicious code to the user, returns the handle corresponding to the file, and then terminates the file open operation.

The interface module 120 requests the malicious code inspection module 130 to inspect the file for malicious code by providing the handle corresponding to the file and the path of the file, taken over from the DRM module 110, to the malicious code inspection module 130, before the encrypted file is opened. Further, the results of the inspection performed by the malicious code inspection module 130 are output to the DRM module 110. Such an interface module 120 can also be integrated with the DRM module 110.

The malicious code inspection module 130 inspects whether a source file decrypted and read by the DRM module 110 has been infected with malicious code, based on the handle corresponding to the file and the path of the file, which have been provided by the interface module 120. The malicious code inspection module 130 is loaded and executed by an application program supporting the DRM module 110, so that the contents of the encrypted file can be decrypted and read by using the handle received as a parameter. Further, since the malicious code inspection module 130 is called by hooked context, operations such as a Createfile() call operation and a message output operation must not be performed, and only inspection must be performed using the handle for the corresponding file. If it is desired to output the message "under inspection" during the inspection of malicious code, the output of the corresponding message is requested from the malicious code removal module 140. The output of this message can be performed before the results of the inspection of malicious code are returned to the interface module 120. Further, the malicious code inspection module 130 returns the results of the inspection, such as non-infection, infection, and error, to the interface module 120. Furthermore, the malicious code inspection module 130 notifies the malicious code removal module 140 of the occurrence of infection by providing the path of the corresponding file to the malicious code removal module 140 if it is determined that the file has been infected with malicious code.

The malicious code removal module 140 removes the malicious code depending on the user's selection, based on the path of the corresponding file received from the malicious code inspection module 130. The operation of removing the malicious code can be implemented using an SDK provided by the DRM module 110 in the same manner as that of user testing (that is, manual testing). Therefore, after the malicious code inspection module 130 has detected malicious code from the corresponding file, the removal of the malicious code is performed in the same manner as that of the existing manual testing. In this way, the reason for the malicious code removal module 140 to perform a removal operation using a separate operation is that the DRM module 110, the interface module 120, and the malicious code inspection module 130 are operated in the same process, and so they can share a file handle and access file contents with the file contents decrypted, but the malicious code removal module 140 cannot share a file handle with those modules and cannot access the file contents with the file contents decrypted because it is operated in a process differing from that of those modules.

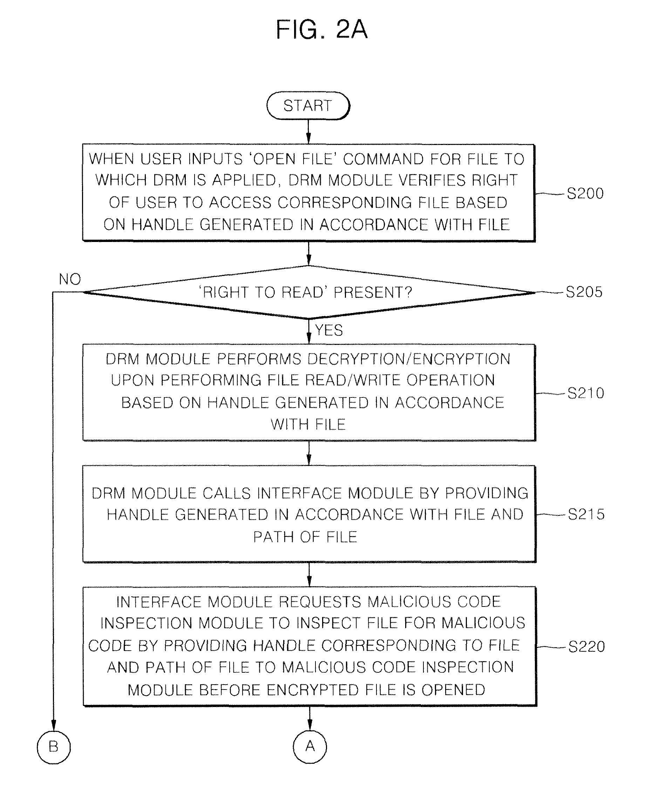

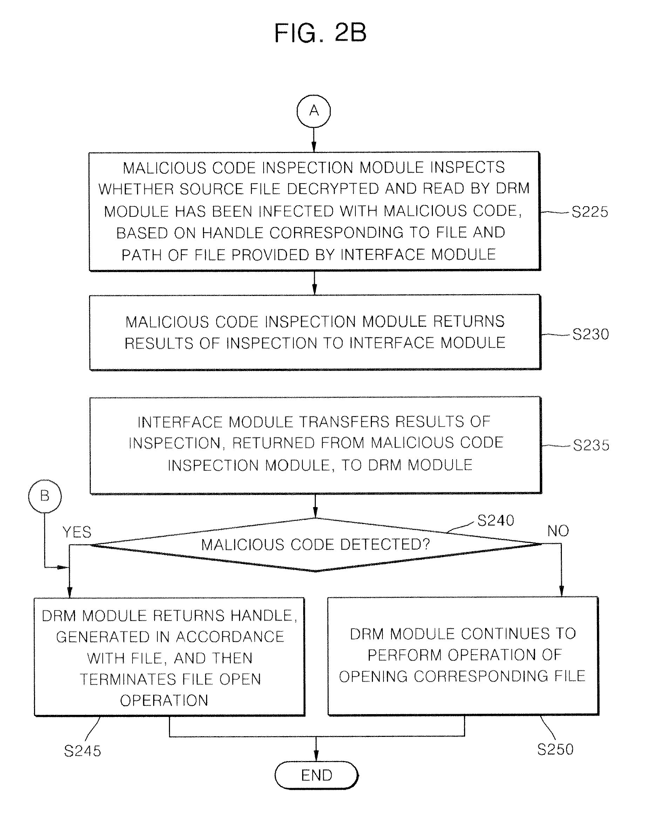

Fig. 2 is a flowchart showing a process for performing a preferred embodiment of a real-time malicious code inspection method in a DRM environment according to the present invention.

Referring to Fig. 2, when a user inputs an 'open file' command for a file to which DRM is applied, the DRM module 110 verifies the right of the user to access the corresponding file based on a handle generated in accordance with the file at step S200. If it is verified that the user has the 'right to read' the file at step S205, the DRM module 110 performs decryption/encryption upon performing a file read/write operation based on the handle generated in accordance with the file at step S210. Next, the DRM module 110 calls the interface module 120 by providing the handle generated in accordance with the file and a path of the file at step S215. Next, the interface module 120 requests the malicious code inspection module 130 to inspect the file for malicious code by providing the handle corresponding to the file and the path of the file, taken over from the DRM module 110, to the malicious code inspection module 130 before the encrypted file is opened at step S220. Further, the malicious code inspection module 130 inspects whether a source file decrypted and read by the DRM module 110 has been infected with malicious code, based on the handle corresponding to the file and the path of the file, which are provided by the interface module 120, at step S225.

Next, the malicious code inspection module 130 returns the results of the inspection to the interface module 120 at step S230. The interface module 120 transfers the results of the inspection, returned from the malicious code inspection module 130, to the DRM module 110 at step S235. The DRM module 110 verifies the received inspection results at step S240. If it is verified that any malicious code has been detected, the DRM module 110 returns the handle, generated in accordance with the file, and then terminates the file open operation at step S245. The termination of the file open operation is performed in the same manner even after it is verified at step S205 that the user does not have the 'right to read' the file. In contrast, if it is verified that any malicious code has not been detected, the DRM module 110 continues to perform the operation of opening the corresponding file at step S250.

Meanwhile, the malicious code inspection module 130 requests the malicious code removal module 140 to remove the malicious code of the file, in which the malicious code has been detected, by providing the path of the file to the malicious code removal module 140. The operation of requesting the removal of the malicious code can be selectively performed depending on the status of setting. In this case, after the results of the inspection have been returned to the DRM module 110, the malicious code removal module 140 outputs a message indicative of the infection of the corresponding file with the malicious code to the user, based on the path of the file received from the malicious code inspection module 130, and allows the user to select whether to remove the malicious code. If the user selects removal, the malicious code removal module 140 performs the operation of removing the malicious code from the corresponding file. The removal operation performed by the malicious code removal module 140 is identical to that of a conventional process for manually cleaning a file to which DRM is applied.

The present invention may be implemented as computer-readable code stored in a computer-readable recording medium. The computer-readable recording medium includes all types of storage devices in which computer system-readable data is stored. Examples of the computer-readable recording medium are Read Only Memory (ROM), Random Access Memory (RAM), Compact Disk-Read Only Memory (CD-ROM), magnetic tape, a floppy disk, and an optical data storage device. Furthermore, the computer-readable recording medium may be implemented as carrier waves (for example, in the case of transmission over the Internet). Moreover, the computer-readable medium may be distributed across computer systems connected via a network, so that computer-readable code can be stored and executed in a distributed manner.

Although the preferred embodiments of the present invention have been illustrated and described, the present invention is not limited to the above-described specific preferred embodiments, and those having ordinary knowledge in the technical field to which the present invention pertains can make various modifications and variations without departing from the gist of the present invention that is claimed in the attached claims. Such modifications and variations fall within the scope of the claims.

## Claims

1. A real-time malicious code inspection apparatus in a Digital Rights Management (DRM) environment, comprising:
a DRM module configured to, when a user inputs an execution command for a file to which DRM is applied, verify a right of the user to access the file based on a handle generated in accordance with the file, perform decryption/encryption upon performing a file read/write operation using the handle generated in accordance with the file, output an inspection request message including both the handle generated in accordance with the file and a path of the file, and determine whether to perform an operation of opening the file, based on results of inspection of the file for malicious code;
an interface module configured to transfer the inspection request message input from the DRM module; and
a malicious code inspection module configured to inspect whether a source file decrypted and read by the DRM module has been infected with malicious code, based on the handle generated in accordance with the file and the path of the file, which are included in the inspection request message received from the interface module, and transfer results of inspection of the source file for malicious code to the DRM module via the interface module.

2. The real-time malicious code inspection apparatus of claim 1, further comprising a malicious code removal module for removing the malicious code depending on selection of the user, based on the path of the file received from the malicious code inspection module.

3. The real-time malicious code inspection apparatus of claim 2, wherein the malicious code removal module is configured to, after the results of the inspection of malicious code have been returned to the DRM module, output a message indicative of infection of the file with the malicious code to the user based on the path of the file received from the malicious code inspection module, and then allow the user to select whether to remove the malicious code.

4. The real-time malicious code inspection apparatus of claim 1 or 2, wherein the DRM module is configured to, if it is determined that the malicious code has been detected in the file, output to the user a message indicating occurrence of infection with the malicious code and inquiring whether to remove the malicious code, and terminate the file open operation by returning the handle corresponding to the file.

5. The real-time malicious code inspection apparatus of claim 1 or 2, wherein the malicious code inspection module requests the malicious code removal module to output a message indicating that malicious code is under inspection to the user during inspection of the malicious code.

6. A computer-readable recording medium for storing a program for executing a real-time malicious code inspection method in a Digital Rights Management (DRM) environment on a computer, comprising:
(a) when a user inputs an execution command for a file to which DRM is applied, verifying a right of the user to the file based on a handle generated in accordance with the file, performing decryption/encryption upon performing a file read/write operation using the handle generated in accordance with the file, and outputting an inspection request message including both the handle generated in accordance with the file and a path of the file;
(b) inspecting whether a decrypted and read source file has been infected with malicious code, based on the handle generated in accordance with the file and the path of the file, which are included in the inspection request message input from a DRM module, and returning results of inspection of the source file for malicious code; and
(c) determining whether to perform an operation of opening the file, based on the results of the inspection of the file for malicious code.

7. The computer-readable recording medium of claim 6, wherein (c) is configured to, if it is determined that any malicious code has been detected in the file, output to the user a message indicating occurrence of infection with the malicious code and inquiring whether to remove the malicious code, and terminate the file open operation by returning the handle corresponding to the file.
